# EUROPEAN PATENT SPECIFICATION

(11) **EP 4 101 752 B1**
(45) Date of publication and mention of the grant of the patent: **18.03.2026**
(21) Application number: 20918026.4
(22) Date of filing: 21.12.2020
(51) Int. Cl.: B63B 25/16, B63J 3/04, B63B 13/00, F17C 9/00, F17C 13/04, F17C 13/02

(54) **SYSTEM AND METHOD FOR REGASIFYING LIQUEFIED GAS OF SHIP**
SYSTEM UND VERFAHREN ZUM REGASIFIZIEREN VON VERFLÜSSIGTEM SCHIFFSGAS
SYSTÈME ET PROCÉDÉ DE REGAZÉIFICATION DE GAZ LIQUÉFIÉ D'UN NAVIRE

(30) Priority: 07.02.2020 KR 20200014700
(43) Date of publication of application: 14.12.2022
(73) Proprietor: Hanwha Ocean Co., Ltd., Geoje-si, Gyeongsangnam-do 53302 (KR)
(72) Inventor: CHO, Du Hyeon, Siheung-si, Gyeonggi-do (KR); AN, Su Kyung, Gwangmyeong-si, Gyeonggi-do (KR); PARK, Myung Chul, Gimpo-si, Gyeonggi-do (KR); SEO, Da Hye, Incheon 22785 (KR)
(74) Representative: Cabinet Beau de Loménie
(86) International application number: PCT/KR2020/018773
(87) International publication number: WO 2021/157855

(56) References cited:
- WO-A2-2007/011921
- JP-A- 2018 119 511
- KR-A- 20170 091 492
- KR-A- 20180 060 214
- KR-A- 20180 060 214
- KR-A- 20180 125 079
- KR-A- 20190 100 391
- KR-A- 20190 136 215
- KR-A- 20190 136 215
- KR-B1- 101 945 596
- US-A1- 2010 083 670
- US-A1- 2019 032 852
- US-B1- 6 564 579
- US-B2- 9 863 581

## Description

### [Technical Field]

The present invention relates to a liquefied gas regasification system and method for vessels, which generate power by recovering cold heat discarded in regasification of liquefied gas to improve energy efficiency.

### [Background Art]

LNG regasification vessels or floating offshore structures (hereinafter, commonly referred to as "LNG regasification vessels"), such as LNG regasification vessels (LNG RVs) or floating storage and regasification units (LNG FSRUs), are directed to supply natural gas obtained through regasification of liquefied natural gas (LNG) at sea to onshore gas consumers.

Such an LNG regasification vessel is provided with an LNG storage tank adapted to store LNG and a regasification facility adapted to supply natural gas to a gas demand site on land through regasification of the LNG stored in the LNG storage tank, in which the natural gas generated by the regasification facility is supplied to onshore gas consumers through pipes.

The regasification facility of the LNG regasification vessel includes a high-pressure pump compressing LNG stored in the LNG storage tank to a pressure required for an onshore gas consumer and a vaporizer gasifying the high pressure LNG compressed by the high pressure pump into natural gas.

For easy supply, seawater is mainly used as a heat source for gasification of LNG in the vaporizer.

An LNG regasification system using seawater as a heat source may be classified into a direct heat exchange type in which LNG is gasified through direct heat exchange between seawater and LNG in the vaporizer, and an indirect heat exchange type in which a separate heating medium is heated through heat exchange with seawater and LNG is gasified through heat exchange between LNG and the heating medium heated by the seawater.

Despite good heat transfer efficiency through direct transfer of heat energy of seawater to LNG, the direct heat exchange type has a problem of freezing the seawater in the heat exchanger.

Although the indirect heat exchange type can prevent the problem of freezing the seawater, the indirect heat exchange type has lower heat exchange efficiency than the direct heat exchange type due to heat exchange between the seawater and the heating medium.

Moreover, low-temperature seawater having cold heat recovered from LNG through direct or indirect heat exchange with LNG is discharged back to the sea. That is, in the process of regasifying the LNG, the cold heat of the LNG recovered by the seawater is discarded to sea as is.

In general, natural gas is transported to a distant destination by an LNG carrier after being transformed into liquefied natural gas (LNG) through liquefaction at extremely low temperatures at a production site. LNG is obtained by cooling natural gas to a cryogenic temperature of about -163°C and has a volume of about 1/600 that of natural gas in a gaseous state. Thus, LNG is suited to long distance transport by sea.

A process of generating LNG through liquefaction of natural gas requires a large quantity of energy, in which LNG has a cold-heat energy of 200 kcal/kg.

That is, in the process of regasifying LNG, the cold heat of LNG recovered by seawater is discarded to sea as is. The document KR 20180125079 discloses a liquefied gas regasification system

### [Disclosure]

### [Technical Problem]

Embodiments of the present invention provide a liquefied-gas regasification system and method for vessels, which can generate power by recovering cold heat discarded in regasification of liquefied gas to improve energy efficiency and can supply natural gas to gas consumers through stable regasification of the liquefied gas.

### [Technical Solution]

In accordance with one aspect of the present invention, there is provided a liquefied-gas regasification system for vessels, including: a vaporizer gasifying liquefied gas into a regasified gas through heat exchange with a first heating medium; a trim heater heating the regasified gas to a temperature required for a gas consumer through heat exchange with a second heating medium when the regasified gas is delivered from the vaporizer to the gas consumer; a first cycle in which the first heating medium is circulated; and a second cycle in which the second heating medium is circulated, wherein the first cycle includes a first heat exchanger gasifying the first heating medium to be supplied to the vaporizer through heat exchange with a heat source; and an expander-generator generating power through expansion of the first heating medium gasified by the first heat exchanger, and the second cycle includes a second heat exchanger heating the second heating medium to be supplied to the trim heater through heat exchange with a heat source.

The heat source may include one of seawater and steam.

The liquefied-gas regasification system may further include a seawater pump suctioning and supplying seawater as the heat source to the first heat exchanger and the second heat exchanger, wherein the seawater pump, the first heat exchanger and the second heat exchanger are disposed under a deck of the vessel, and the vaporizer and the trim heater are disposed on an upper deck of the vessel.

The first heating medium may be a refrigerant undergoing phase change while circulating in the first cycle and may be selected from among a natural refrigerant, an HFO-based refrigerant, an HFC-based refrigerant, and a mixture thereof not providing fire and explosion risks.

The second heating medium may be glycol water.

The liquefied-gas regasification system may further include a first branch-off line branched off upstream of the expander-generator from a first heating medium line connected to the expander-generator to deliver the first heating medium gasified by the first heat exchanger to the expander-generator, wherein the first branch-off line is connected to the vaporizer such that the first heating medium supplied to the expander-generator is supplied to the vaporizer after bypassing the expander-generator along the first branch-off line.

The liquefied-gas regasification system may further include: a high-pressure pump compressing the liquefied gas to a pressure required for the gas consumer to supply the compressed liquefied gas to the vaporizer; and a first valve controlling a flow rate of the liquefied gas supplied from the high-pressure pump to the vaporizer.

The liquefied-gas regasification system may further include: a first temperature measurement unit measuring a temperature of natural gas supplied from the trim heater to the gas consumer; a first pressure measurement unit measuring a pressure of the natural gas supplied from the trim heater to the gas consumer; a first flow rate measurement unit measuring a flow rate of the natural gas supplied from the trim heater to the gas consumer; and a first controller regulating a regasified amount of the liquefied gas by regulating an opening degree of the first valve depending upon any one selected from among the temperature measured by the first temperature measurement unit, the pressure measured by the first pressure measurement unit and the flow rate measured by the first flow rate measurement unit.

The liquefied-gas regasification system may further include: a second temperature measurement unit measuring a temperature of the second heating medium discharged from the trim heater and cooled through heat exchange; and a first controller regulating a regasified amount of the liquefied gas by regulating an opening degree of the first valve depending upon the temperature measured by the second temperature measurement unit.

The liquefied-gas regasification system may further include: a first temperature measurement unit measuring a temperature of natural gas supplied from the trim heater to the gas consumer; a second temperature measurement unit measuring a temperature of the second heating medium discharged from the trim heater and cooled through heat exchange; at least one selected from among a first pressure measurement unit measuring a pressure of the natural gas supplied from the trim heater to the gas consumer and a first flow rate measurement unit measuring a flow rate of the natural gas supplied from the trim heater to the gas consumer; and a first controller regulating an opening degree of the first valve based on the smallest value selected from among an opening degree of the first valve for maintaining the temperature measured by the first temperature measurement unit within a predetermined range, an opening degree of the first valve for maintaining the temperature measured by the second temperature measurement unit within a predetermined range, and an opening degree of the first valve for maintaining at least one of the pressure measured by the first pressure measurement unit and the flow rate measured by the first flow rate measurement unit within a predetermined range.

The liquefied-gas regasification system may further include: a receiver receiving the first heating medium condensed in the course of gasifying the liquefied gas in the vaporizer; a second branch-off line branched off upstream of the vaporizer from the first heating medium line delivering the first heating medium to the vaporizer such that the first heating medium is supplied to the receiver after bypassing the vaporizer along the second branch-off line; a second pressure measurement unit measuring a pressure of the receiver; and a second controller regulating an opening degree of a second valve disposed on the second branch-off line depending upon the pressure measured by the second pressure measurement unit.

The liquefied-gas regasification system may further include: a receiver receiving the first heating medium condensed in the course of gasifying the liquefied gas in the vaporizer; a second branch-off line branched off upstream of the vaporizer from the first heating medium line delivering the first heating medium to the vaporizer such that the first heating medium is supplied to the receiver after bypassing the vaporizer along the second branch-off line; a third temperature controller measuring a temperature of the regasified gas supplied from the vaporizer to the trim heater; and a second controller regulating an opening degree of a second valve disposed on the second branch-off line depending upon the temperature measured by the third temperature controller.

The liquefied-gas regasification system may further include: a receiver receiving the first heating medium condensed in the course of gasifying the liquefied gas in the vaporizer; a second branch-off line branched off upstream of the vaporizer from the first heating medium line delivering the first heating medium to the vaporizer such that the first heating medium is supplied to the receiver after bypassing the vaporizer along the second branch-off line; a second valve disposed on the second branch-off line and allowing regulation of an opening degree thereof; a second pressure measurement unit measuring a pressure of the receiver; a third temperature controller measuring a temperature of the regasified gas supplied from the vaporizer to the trim heater; and a second controller regulating an opening degree of the second valve based on a smaller value selected from among an opening degree of the second valve for maintaining the pressure measured by the second pressure measurement unit within a predetermined range and an opening degree of the second valve for maintaining the temperature measured by the third temperature controller within a predetermined range.

In accordance with another aspect of the present invention, there is provided a liquefied-gas regasification method for vessels, including: gasifying liquefied gas through heat exchange with a first heating medium; and heating the regasified gas to a temperature required for a gas consumer through heat exchange with a second heating medium, wherein the first heating medium is circulated in a first cycle in which the first heating medium is gasified through heat exchange with a heat source and the gasified first heating medium is expanded to generate power and subjected to heat exchange with the liquefied gas, and the second heating medium is circulated in a second cycle in which the second heating medium is heated through heat exchange with the heat source and subjected to heat exchange with the regasified gas.

A heat source for heating the first heating medium and the second heating medium may be seawater, steam, or a combination of seawater and steam; the first heating medium may be a refrigerant undergoing phase change while circulating in the first cycle and may be selected from among a natural refrigerant, an HFO-based refrigerant, an HFC-based refrigerant, or a mixture thereof not providing fire and explosion risks; and the second heating medium may be glycol water.

The liquefied gas to be regasified may be compressed to a pressure required for the gas consumer and subjected to heat exchange with the first heating medium; and a flow rate of the liquefied gas to be subjected to heat exchange with the first heating medium may be controlled based on a measured value obtained by measuring at least one selected from among a pressure, a temperature and a flow rate of the regasified gas heated through heat exchange with the second heating medium and supplied to the gas consumer.

The liquefied gas to be regasified may be compressed to a pressure required for the gas consumer and subjected to heat exchange with the first heating medium; and a flow rate of the liquefied gas to be subjected to heat exchange with the first heating medium may be controlled based on a measured value obtained by measuring a temperature of the second heating medium cooled while heating the regasified gas.

The first heating medium condensed in the course of gasifying the liquefied gas may be stored in the receiver and resupplied to the vaporizer after heat exchange with the heat source; and a flow rate of the first heating medium to be directly supplied to the receiver without heat exchange with the liquefied gas may be controlled depending upon at least one measurement value selected from among a pressure measurement value of the receiver and a temperature measurement value of the regasified gas to be subjected to heat exchange with the second heating medium.

### [Advantageous Effects]

Embodiments of the present invention provide a liquefied-gas regasification system and method for vessels, which can improve energy efficiency while reducing fuel consumption for power generation and suppressing discharge of greenhouse gases through generation of power by recovering cold heat discarded in regasification of liquefied gas.

In addition, even when heat capacity of a first heating medium is insufficient in a vaporizer, a regasified gas can be stably supplied to gas consumers after being heated to the minimum delivery temperature or more using a trim heater.

Further, with the trim heater, the regasification system and method can prevent insufficient gasification of liquefied gas due to thermal unbalance between a supply amount of the liquefied gas and a supply amount of the first heating medium in a loop cycle of the first heating medium in an initial operation stage of the regasification system, thereby enabling stable operation of the regasification system.

Further, in the regasification system, the first heating medium and the second heating medium heated through heat exchange with seawater under a deck are supplied to the vaporizer on an upper deck, thereby enabling reduction in power consumption through reduction in minimum head of a seawater pump for suctioning seawater.

### [Description of Drawings]

FIG. 1 is a schematic diagram of a liquefied gas regasification system of a vessel according to one embodiment of the present invention.
FIG. 2 is a schematic diagram of the liquefied gas regasification system shown in FIG. 1, illustrating some components of the liquefied gas regasification system including a temperature controller.
FIG. 3 is a Q-T (heat quantity-temperature) graph when a first heating medium, that is, a refrigerant, is used as a heat source in a trim heater according to the embodiment of the present invention.
FIG. 4 is a Q-T (heat quantity-temperature) graph when a second heating medium, that is, glycol water, is used as a heat source in the trim heater according to the embodiment of the present invention.

### [Best Mode]

The above and other aspects, features, and advantages of the present invention will become apparent from the detailed description of the following embodiments in conjunction with the accompanying drawings.

Embodiments of the present invention will be described with reference to the accompanying drawings. It should be noted that like components will be denoted by like reference numerals throughout the specification and the accompanying drawings. In addition, description of known functions and constructions which may unnecessarily obscure the subject matter of the present invention will be omitted. Moreover, description of known functions and constructions which may unnecessarily obscure the subject matter of the present invention will be omitted. Hereinafter, exemplary embodiments of the present invention will be described in detail with reference to the accompanying drawings.

As used herein, "liquefied gas" may refer to a gas that can be transported in liquid form by being liquefied at low temperature, for example, liquefied petrochemical gas, such as liquefied natural gas (LNG), liquefied ethane gas (LEG), liquefied petroleum gas (LPG), liquefied ethylene gas, and liquefied propylene gas. In addition, "liquefied gas" may also refer to a gas in a liquid state, such as liquefied carbon dioxide, liquefied hydrogen, and liquefied ammonia. However, the following embodiments will be described using LNG, which is a typical liquefied gas, by way of example.

Although an LNG regasification vessel according to embodiments of the present invention will be described as applied to vessels, it will be understood that the LNG regasification vessel according to the embodiments of the present invention may also be applied to onshore facilities.

In addition, in one embodiment of the invention, an LNG regasification vessel may include any ship that is provided with an LNG regasification facility to regasify LNG and supply the regasified LNG to gas consumers, including self-propelled ships, such as LNG regasification vessels (RVs), and floating offshore structures, such as floating storage regasification units (FSRUs). Further, in the following embodiments, the LNG regasification vessels may refer to LNG FSRUs by way of example.

Further, the LNG regasification vessel according to the embodiments of the invention may regasify LNG at sea to supply the regasified LNG to onshore gas consumers via a pipe network (regas network).

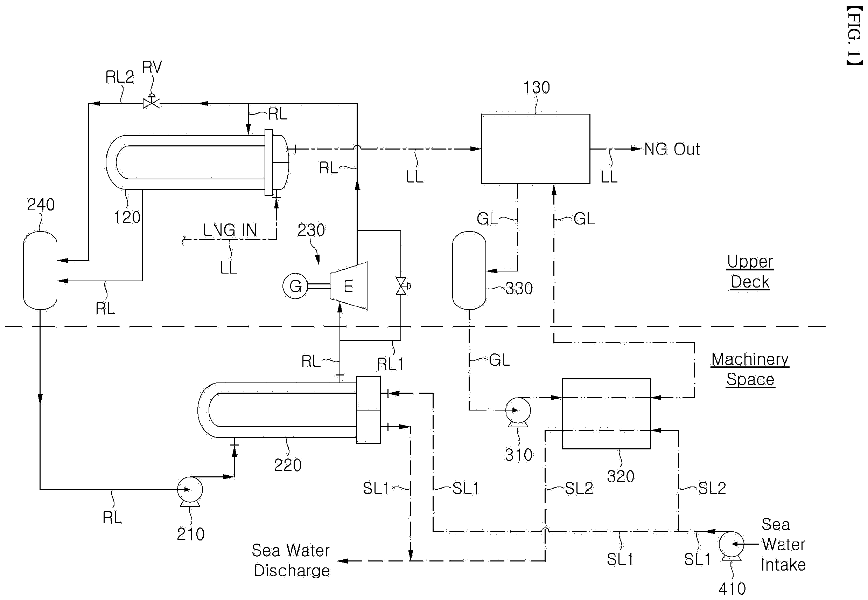

A liquefied gas regasification system and method for vessels according to one embodiment will be described with reference to FIG. 1 to FIG. 4.

An LNG regasification vessel according to one embodiment of the present invention may include an LNG storage tank (not shown) that stores LNG, a boil-off processing unit (not shown) that processes boil-off gas (BOG) generated in the LNG storage tank, a bunkering unit (not shown) that loads LNG to the LNG storage tank or unloading LNG stored in the LNG storage tank, and a regasification system that gasifies LNG stored in the LNG storage tank to supply regasified LNG to an onshore gas consumer (jetty).

The LNG regasification vessel according to the embodiment of the present invention can perform an LNG loading/unloading process of the LNG storage tank and an LNG regasification process.

The LNG storage tank may be provided in plural and LNG may have a temperature of about -161°C and may be stored under a pressure of 1.1 bar in the LNG storage tank. Since LNG has a vapor pressure higher than atmospheric pressure and a boiling point of about -163°C, LNG must be safely stored in order to use LNG in a vessel. Therefore, the LNG storage tank according to this embodiment requires LNG storage, temperature maintenance, and airtight functions. To this end, the LNG storage tank may include an insulating material and auxiliary equipment to maintain the cryogenic temperature of LNG by blocking heat inflow from an outside. In addition, the LNG storage tank may be formed of a special material that can withstand extremely low temperatures.

The BOG processing unit may process boil-off gas generated when LNG is loaded into the LNG storage tank and boil-off gas generated through natural vaporization of the LNG stored in the LNG storage tank.

The BOG processing unit may include a low pressure compressor (not shown) that compresses boil-off gas discharged from the LNG storage tank to a pressure required for an engine and supplies the boil-off gas as fuel for the engine. In addition, the BOG processing unit may further include a fuel heater (not shown) for heating the boil-off gas compressed by the low-pressure compressor to a temperature required for the engine.

The engine may be a low-pressure engine, for example, a dual fuel diesel electric (DFDE) engine capable of generating power using boil-off gas as fuel.

The BOG processing unit may further include a condenser (not shown) that mixes LNG with the boil-off gas compressed by the low-pressure compressor and condenses the boil-off gas mixed with LNG.

The boil-off gas condensed by the condenser, that is, LNG, may be recovered by the LNG storage tank or may be supplied to a high-pressure pump 110 of a regasification system described below. LNG supplied to the condenser may be LNG supplied from the LNG storage tank to the high-pressure pump 110 or LNG compressed by the high-pressure pump 110.

On the other hand, a pressure upstream of the high-pressure pump 110 may be regulated using the condenser as a suction drum by regulating the flow rate of LNG supplied from the condenser to the high-pressure pump 110.

The BOG processing unit may further include a high-pressure compressor (not shown) that compresses the boil-off gas discharged from the LNG storage tank to a pressure required for a gas consumer to supply the compressed boil-off gas together with the regasified gas to the gas consumer.

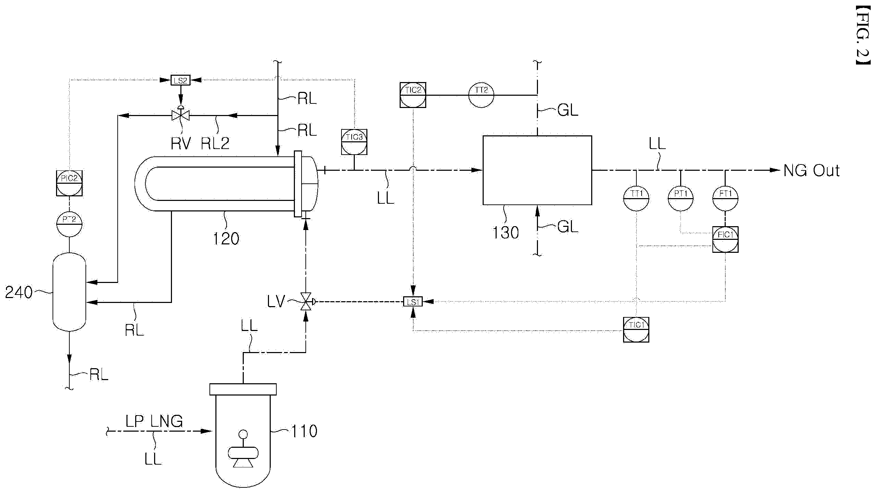

Referring to FIG. 1 and FIG. 2, a liquefied gas regasification system for vessels according to one embodiment includes the high-pressure pump 110 that compresses LNG stored in the LNG storage tank at least to a pressure required for a gas consumer, a vaporizer 120 that gasifies the high pressure LNG compressed by the high pressure pump 110, and a trim heater 130 that regulates the temperature of the regasified gas gasified by the vaporizer 120, that is, natural gas, to a temperature required for the gas consumer or completely gasifies LNG not gasified by the vaporizer 120 and heats the LNG to the temperature required for the gas consumer.

Further, the liquefied gas regasification system according to the embodiment includes a first cycle in which a first heating medium is circulated as a heat source for gasification of LNG through heat exchange with LNG in the vaporizer 120, a second cycle in which a second heating medium is circulated as a heat source for heating natural gas in the trim heater 130, and a seawater pump 410 that supplies seawater as a heat source for heating the first heating medium circulated in the first cycle and the second heating medium circulated in the second cycle.

Further, the LNG storage tank may be provided with a supply pump (not shown) by which LNG stored in the LNG storage tank is discharged and supplied to the high-pressure pump 110. The power pump may be an in-tank pump disposed in the LNG storage tank or a submergible pump that can be operated in a state of being submerged in LNG stored in the LNG storage tank.

According to this embodiment, the high-pressure pump 110 compresses LNG to a pressure of the regasified gas required for the gas consumer to supply the compressed LNG to the vaporizer 120. Although the pressure required for the gas consumer differs according to each jetty, the pressure required for the gas consumer is generally in the range of about 50 bar to about 100 bar. That is, the high-pressure pump 110 according to this embodiment may compress LNG to a pressure of about 50 bar to about 100 bar or a higher pressure than this pressure in consideration of pressure loss.

According to this embodiment, in the vaporizer 120, the high pressure LNG compressed to the pressure of the regasified gas required for the gas consumer by the high-pressure pump 110 may be gasified into a gas phase or may be partially gasified into a mixed phase of gas and liquid through heat exchange with the first heating medium circulating in the first cycle. The temperature of the compressed LNG vaporized by the vaporizer 120 may vary depending upon the conditions of the heat source, such as the temperature or the flow rate of the first heating medium and/or seawater.

The vaporizer 120 according to this embodiment may be a shell & tube heat exchanger, particularly a 1-pass type shell & tube heat exchanger in which a tube passes through a shell once.

In the trim heater 130 according to this embodiment, the regasified gas gasified by the vaporizer 120 is heated to a temperature required for the gas consumer and supplied to the gas consumer. In addition, when there is LNG not gasified by the vaporizer 120 due to lack thermal capacity of the first heating medium, all LNG may be gasified and heated to a temperature required for the gas consumer by the trim heater 130.

The trim heater 130 according to this embodiment may be a shell & tube heat exchanger, particularly a 2-pass type shell & tube heat exchanger in which a tube passes through a shell twice.

Since an onshore gas consumer typically requires a regasified gas having a temperature of about 0°C to about 10°C or about 8°C to 10°C and a pressure of 50 bar to 100 bar, the trim heater 130 may heat the regasified gas to be supplied from the vaporizer 120 to the onshore gas consumer to a temperature of about 0°C to 10°C.

According to this embodiment, LNG stored in the LNG storage tank is compressed by the high-pressure pump 110, gasified by the vaporizer 120, and heated by the trim heater 130 to be supplied to the gas consumer while flowing along a liquefied gas line LL.

According to this embodiment, the first cycle includes a first pump 210 adapted to circulate the first heating medium, a first heat exchanger 220 adapted to gasify the first heating medium compressed by the first pump 210, an expander-generator 230 adapted to expand the first heating medium gasified by the first heat exchanger 220 and to generate power through conversion of expansion of the first heating medium into power, and a receiver 240 adapted to store the first heating medium condensed through heat exchange with LNG in the vaporizer 120.

The first heating medium circulates in the first cycle corresponding to a loop cycle in which the first heating medium is compressed by the first pump 210, gasified by the first heat exchanger 220, expanded by the expander-generator 230, condensed by the vaporizer 120, and supplied to the first pump 210 through the receiver 240 while flowing along a first heating medium line RL.

In the first heat exchanger 220 according to this embodiment, the first heating medium is suctioned by a seawater pump 410 and is gasified through heat exchange with seawater supplied to the first heat exchanger 220 along a first seawater line SL1.

In the first heat exchanger 220, seawater is cooled while gasifying the first heating medium and the cooled seawater may be discharged from the first heat exchanger 220 along the first seawater line SL1.

In this embodiment, seawater is used as a heat source for gasification of the first heating medium in the first heat exchanger 220 by way of example. However, it should be understood that steam generated in an on-board steam generator (not shown) may be used alone or complementarily together with seawater.

For example, for complementary use of seawater and steam, the first heat exchanger 220 may include a 3-stage stream heat exchanger in which heat exchange of the first heating medium with seawater and steam occurs. Alternatively. a first stage heat exchanger adapted to perform heat exchange between the first heating medium and seawater and a second stage heat exchanger adapted to perform heat exchange between the first heating medium and steam may be disposed in series such that the first heating medium can be heated stepwise, or the first stage heat exchanger adapted to perform heat exchange between the first heating medium and seawater and the second stage heat exchanger adapted to perform heat exchange between the first heating medium and steam may be disposed in parallel to regulate the temperature of the first heating medium heated by the first heat exchanger 220. Alternatively, the liquefied gas regasification system may further include a seawater heater adapted to heat seawater through heat exchange with steam to supply the seawater heated by the seawater heater to the first heat exchanger 220.

Further, the first heat exchanger 220 according to this embodiment may be a shell & tube heat exchanger or a plate-type heat exchanger.

The first heating medium gasified or heated by seawater in the first heat exchanger 220 is supplied to the expander-generator 230 in which the first heating medium is expanded and expansion of the first heating medium is converted into power. Power generated by the expander-generator 230 may be used by an on-board power consumer.

According to this embodiment, the first heating medium line RL includes a first branch-off line RL1, which is branched off upstream of the expander-generator 230 and is connected to the vaporizer 120 such that the first heating medium gasified by the first heat exchanger 220 can be directly supplied from the first heat exchanger 220 to the vaporizer 120 after bypassing the expander-generator 230, that is, without passing through the expander-generator 230.

When the expander-generator 230 cannot be used due to failure thereof, the first heating medium is supplied from the first heat exchanger 220 to the vaporizer 120 through the first branch-off line RL1, thereby preventing an influence on supply of natural gas to an onshore gas consumer.

Further, the first branch-off line RL1 serves to allow the first heating medium to bypass the expander-generator 230 upon maintenance of the expander-generator 230 and to regulate an upstream pressure corresponding to retardation of the response rate at an inlet side valve of the expander-generator 230 upon increase in a circulation flow rate of the first heating medium due to rapid increase in regasification capacity of the vaporizer 120.

In the expander-generator 230, the first heating medium vaporized or heated through heat exchange with seawater in the first heat exchanger 220 may be reduced in pressure and temperature while expanding.

The first heating medium expanded in the expander-generator 230 is supplied to the vaporizer 120 along the first heating medium line RL to be cooled or condensed through heat exchange with LNG in the vaporizer 120. The first heating medium cooled or condensed in the vaporizer 120 is delivered to the receiver 240 along the first heating medium line RL.

The receiver 240 according to this embodiment is a pressure vessel to which the first heating medium condensed by the vaporizer 120 is supplied, and also acts as a buffering tank by controlling the flow rate and pressure of the first heating medium circulated in the first cycle. The pressure of the receiver 240 may be maintained at a constant pressure through control of a second valve RV described below.

In this embodiment, the first heating medium may be selected from materials or mixtures thereof undergoing phase change while circulating in the first cycle.

That is, the first heating medium may be gasified through heat exchange with seawater in the first heat exchanger 220, expanded in the expander-generator 230, and condensed in the vaporizer 120.

According to this embodiment, the first heating medium may be a natural refrigerant, a hydrofluorocarbon (HFC) based refrigerant, a hydrofluoroolefin (HFO) based refrigerant, or a mixture thereof not providing fire and explosion risks. For example, the first heating medium may be R-23, R-32, R-134a, R-407c, R-410A, or a mixture thereof.

In the expander-generator 230, the first heating medium isentropically expands and undergoes decrease in temperature in this process.

For example, when the first heating medium gasified and heated in the first heat exchanger 220 has a temperature of 11°C and a pressure of 5 barg and is expanded to a pressure of 2 barg in the expander-generator 230, the temperature of the first heating medium is decreased to about -10.5°C. When the first heating medium discharged from the expander-generator 230 and having a temperature of - 10.5°C is supplied as a heat source for gasification of LNG in the vaporizer 120, natural gas discharged from the vaporizer 120 cannot satisfy the lowest temperature condition, for example, a temperature of 8°C.

Thus, according to the embodiment, the regasification system further includes the trim heater 130 that heats the natural gas supplied from the vaporizer 120 to a gas consumer to a temperature higher than or equal to the lowest temperature condition required for the gas consumer.

As such, according to the embodiment, the first heating medium gasified by the first heat exchanger 220 is reduced in temperature while generating power in the expander-generator 230. As a result, since the temperature of the first heating medium supplied to the vaporizer 120 is lower than a temperature required for heating the regasified gas to a temperature required for the gas consumer, it is possible to solve this problem using the trim heater 130 disposed downstream of the vaporizer 120.

In this embodiment, as power is generated by the first heating medium in the expander-generator 230, it is possible to reduce load of a power generation engine provided to the regasification vessel while reducing fuel consumption.

According to this embodiment, the regasification system may further include a second cycle in which the second heating medium is circulated as a heat source for heating natural gas in the trim heater 130.

In the trim heater 130, the natural gas is subjected to heat exchange with the second heating medium circulating in the second cycle, whereby the natural gas is heated to a temperature higher than or equal to the lowest temperature condition, that is, a temperature required for the gas consumer, and the second heating medium is cooled or condensed by recovering cold heat of the natural gas.

The second cycle according to this embodiment includes a second pump 310 adapted to circulate a second heating medium, a second heat exchanger 320 adapted to heat or gasify the second heating medium, and an expansion tank 330 adapted to stabilize the second heating medium discharged from the trim heater 130 after heat exchange.

The second heating medium circulates in the second cycle corresponding to a loop cycle in which the second heating medium is compressed by the second pump 310, gasified or heated by the second heat exchanger 320, cooled or condensed in the trim heater 130, and supplied to the second pump 310 through the expansion tank 330 while flowing along a second heating medium line GL.

In the second heat exchanger 320 according to this embodiment, a heat source for heating the second heating medium may be seawater suctioned by the seawater pump 410 and supplied to the second heat exchanger 320 along a second seawater line SL2.

In the second heat exchanger 320, seawater is cooled while gasifying or heating the second heating medium and the cooled seawater may be discharged from the second heat exchanger 320 along the second seawater line SL2.

In this embodiment, seawater is used as a heat source for gasifying or heating the second heating medium in the second heat exchanger 320 by way of example. However, it should be understood that steam generated in an on-board steam generator may be used alone or complementarily together with seawater, as in the first heat exchanger 220.

Further, the second heat exchanger 320 according to this embodiment may be a plate-type heat exchanger.

The expansion tank 330 according to this embodiment may act as a buffering tank corresponding to volume expansion resulting from variation in temperature of the second heating medium through heat exchange in the second heat exchanger 320.

Further, in the expansion tank 330, foreign matter, such as air and the like, which enters the second heating medium, may be separated from the second heating medium, and, when the natural gas is leaked from the trim heater 130 and flows into the second heating medium, the gas having flown into the second heating medium may also be removed from the second heating medium.

In this embodiment, the second heating medium may be glycol water.

In the expander-generator 230, the first heating medium gasified or heated through heat exchange with seawater in the first heat exchanger 220 is reduced in pressure and temperature while expanding.

Except for the case where the temperature of the seawater used as a heat source in the first heat exchanger 220 is sufficiently higher than the lowest temperature condition for the gas consumer, it is difficult to heat the natural gas above the lowest temperature condition since the first heating medium undergoes very significant decrease in temperature due to variation in pressure of the first heating medium in the expander-generator 230 and has low heat capacity.

Thus, according to this embodiment, the second heating medium, that is, glycol water, may be used as an intermediate heat medium for heating natural gas above the lowest temperature condition.

In general, LNG is compressed above the lowest pressure condition in the high-pressure pump 110 and is vaporized and heated above the lowest temperature condition in the vaporizer 120. For example, when the lowest temperature condition of the natural gas discharged from the vaporizer 120 is 8°C, the first heating medium supplied to the vaporizer 120 is required to have a higher temperature than 8°C in order to satisfy this condition. Considering that the minimum temperature difference between a heating fluid and a fluid to be heated in a general heat exchanger ranges from 2□ to 3□, the temperature of the first heating medium supplied to the vaporizer 120 is about 11□ or higher.

In this embodiment, since the first heating medium is heated by heat exchange with seawater in the first heat exchanger 220, the temperature of seawater supplied to the first heat exchanger 220 is about 14□ or more, considering the minimum temperature difference between the heating fluid and the fluid to be heated in the general heat exchanger.

However, even when the first heating medium is heated to 11°C in the first heat exchanger 220, the temperature of the first heating medium may be lowered to - 10.5°C while generating power in the expander-generator 230, as described above.

Thus, according to this embodiment, the trim heater 130 is used to heat the natural gas vaporized in the vaporizer 120 to the lowest temperature condition for the gas consumer, that is, a final delivery temperature of the natural gas.

If some of the first heating medium supplied from the first heat exchanger 220 to the expander-generator 230 is branched and used as a heating medium for heating the natural gas in the trim heater 130, there can be a problem that the natural gas cannot be heated to the final delivery temperature due to insufficient heat exchange in the trim heater 130, except when the temperature of seawater is sufficiently high such that the temperature difference between the first heating medium and the seawater performing heat exchange in the first heat exchanger 220 becomes higher than the minimum level.

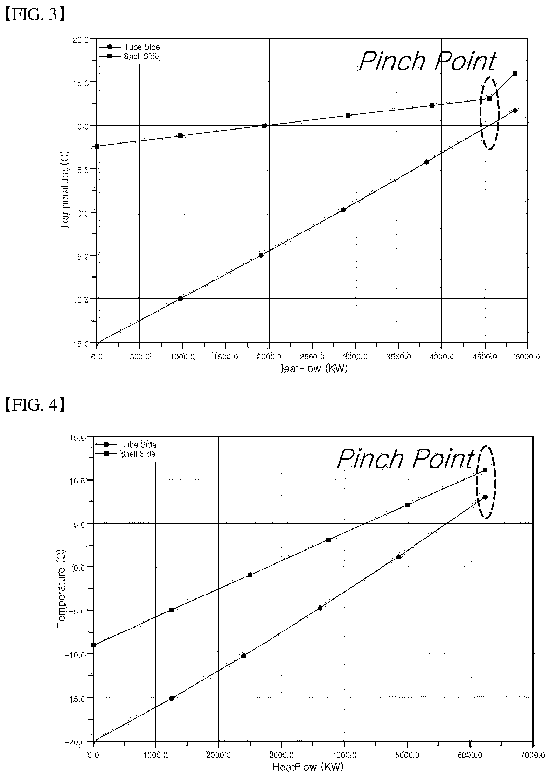

Referring to FIG. 3, since a pinch point is determined inside the trim heater 130 due to low heat capacity and phase change of the first heating medium, the design of the trim heater 130 is not easy. Thus, such difficulty in design can be solved and the regasified gas can be stably heated using the second heating medium.

However, according to this embodiment, the first heating medium, that is, the refrigerant, is used only as the heat source of the vaporizer 120 through heat exchange with the seawater in the first heat exchanger 220 and the second heating medium, that is, glycol water, heated through heat exchange with the seawater in the second heat exchanger 320 is supplied as the heat source of the trim heater 130 to prevent generation of the pinch point inside the trim heater 130 (see FIG. 4), thereby securing sufficient heat exchange performance while stably heating the natural gas to the final delivery temperature.

Further, in an initial operation stage of the regasification system, when LNG is not supplied to the vaporizer 120, the first heating medium is not condensed in the vaporizer 120 and thus cannot be circulated. Thus, it is necessary to increase load of the vaporizer 120 while maintaining supply balance between LNG and the first heating medium. This causes difficulty in operation of the liquefied-gas regasification system.

However, according to this embodiment, glycol water is used as the second heating medium for heating the natural gas in the trim heater 130, whereby the regasification system can prevent LNG from entering the vaporizer 120 due to supply unbalance between LNG and the first heating medium in an initial operation stage of the regasification system, thereby enabling stable operation of the regasification system.

Further, according to this embodiment, as shown in FIG. 1 and FIG. 2, the seawater pump 410, the first heat exchanger 220 and the second heat exchanger 320 are disposed in a machinery space under the deck, and the vaporizer 120 and the trim heater 130 are disposed on an upper deck.

When the seawater suctioned by the seawater pump 410 disposed under the deck is directly supplied to the vaporizer 120 and the trim heater 130 disposed on the upper deck, that is, upon direct heat exchange between the seawater and LNG, the seawater pump 410 suffers from significant power consumption.

However, as in this embodiment, the first cycle is provided to allow heat exchange between the seawater suctioned by the seawater pump 410 and the first heating medium in the first heat exchanger 220 disposed in the machinery space under the deck such that LNG is gasified in the vaporizer 120 by the first heating medium heated by the seawater, and the second cycle is provided to allow heat exchange between the seawater and the second heating medium in the second heat exchanger 320 disposed in the machinery space under the deck such that natural gas is heated in the trim heater 130 by the second heating medium heated by the seawater, thereby reducing power consumption through reduction in minimum head of the seawater pump 410.

Here, despite power consumption of the first pump 210 and/or the second pump 310 for circulation of the first heating medium and/or the second heating medium, the overall power consumption is reduced since the circulation amounts thereof are not large, as compared with the circulation amount of the seawater.

Upon regasification of LNG through indirect heat exchange with seawater using glycol water, power reduction is about 30% and is about 45% in use of the combination of the first cycle and the second cycle, as compared with the case where LNG is regasified through direct heat exchange of LNG with the seawater.

Next, a temperature control method of the regasification system according to the embodiment of the invention will be described with reference to FIG. 2. FIG. 2 is a schematic diagram of the liquefied gas regasification system shown in FIG. 1, illustrating a temperature controller for description of the temperature control method, in which some components of the regasification system are omitted.

Referring to FIG. 2, the regasification system according to this embodiment further includes a second pressure measurement unit PT2 adapted to measure an inner pressure of the receiver 240 and a second branch-off line RL2 branched upward of the vaporizer 120 from the first heating medium line RL and connected to the receiver 240, in which a second valve RV is provided to the second branch-off line RL2.

In addition, the regasification system according to this embodiment further includes a second pressure controller PIC2 that controls the second valve RV in order to regulate the flow rate of the first heating medium bypassing the vaporizer 120 and supplied to the receiver 240 among the first heating medium supplied from the expander-generator 230 and/or the first heat exchanger 220 to the vaporizer 120 depending upon the pressure measured by the second pressure measurement unit PT2.

The second valve RV may also be controlled depending upon the temperature of the natural gas measured by a third temperature controller TIC3 that measures the temperature of the natural gas supplied from the vaporizer 120 to the trim heater 130.

The second controller LS2 may control the opening degree of the second valve RV based on the flow rate of the first heating medium branched off toward the second branch-off line RL2, in order to maintain the flow rate of the first heating medium branched off towards the second branch-off line RL2, as sent from the second pressure controller PIC2, and to maintain the temperature of the natural gas supplied from the vaporizer 120 to the trim heater 130, as sent from the third temperature controller TIC3.

According to this embodiment, the second controller LS2 may include a low selector adapted to control the second valve RV by selecting a smaller value among the opening degrees of the second valve RV for controlling the flow rate of the first heating medium to be branched off towards the second branch-off line RL2, as sent from the second pressure controller PIC2 and the third temperature controller TIC3.

For example, when the pressure of the receiver 240 measured by the second pressure measurement unit PT2 is lower than a predetermined value, the second pressure controller PIC2 sends a signal to the second controller LS2 so as to increase the flow rate of the first heating medium, which bypasses the vaporizer 120 to be supplied to the receiver 240, by increasing the opening degree of the second valve RV.

In addition, when the temperature of the natural gas supplied from the vaporizer 120 to the trim heater 130 is lower than a predetermined value, the third temperature controller TIC3 sends a signal to the second controller LS2 so as to decrease the flow rate of the first heating medium, which bypasses the vaporizer 120, by decreasing the opening degree of the second valve RV.

Here, the second controller LS2 controls the opening degree of the second valve RV by selecting a smaller value among the opening degrees of the second valve RV, as sent from the second pressure controller PIC2 and the third temperature controller TIC3. That is, the second controller LS2 controls the opening degree of the second valve RV while maintaining the minimum flow rate of the first heating medium to be regulated to bypass the vaporizer 120.

Further, the regasification system according to this embodiment includes a first temperature measurement unit TT1 adapted to measure the temperature of the natural gas supplied from the trim heater 130 to a gas consumer, a first pressure measurement unit PT1 adapted to measure the pressure of the natural gas supplied from the trim heater 130 to the gas consumer, and a first flow rate measurement unit FT1 adapted to measure the flow rate of the natural gas supplied from the trim heater 130 to the gas consumer.

In addition, the regasification system according to this embodiment further includes a first temperature controller TIC1 adapted to maintain the temperature of the natural gas supplied from the trim heater 130 to the gas consumer depending upon the temperature measured by the first temperature measurement unit TT1, and a first flow rate controller FIC1 adapted to regulate the flow rate of the natural gas supplied from the trim heater 130 to the gas consumer depending upon the values measured by the first temperature measurement unit TT1, the first pressure measurement unit PT1 and the first flow rate measurement unit FT1.

In addition, the regasification system according to this embodiment further includes a second temperature measurement unit TT2 adapted to measure the temperature of the second heating medium discharged from the trim heater 130 and a second temperature controller TIC2 adapted to maintain the temperature of the second heating medium discharged from the trim heater 130 depending upon the temperature measured by the second temperature measurement unit TT2.

In addition, the regasification system according to this embodiment further includes a first valve LV provided to a liquefied gas line LL along which LNG supplied from the high-pressure pump 110 to the vaporizer 120 flows.

The first controller LS1 may regulate the opening degree of the first valve LV in response to signals sent from the first temperature controller TIC1, the second temperature controller TIC2, and the first flow rate controller FIC1.

For example, when the flow rate measured by the first flow rate measurement unit FT1 is less than a value required for the gas consumer, the first controller LS1 may satisfy a target regasification amount by increasing the opening degree of the first valve LV in response to the signal sent from the first flow rate controller FIC1 so as to increase the flow rate of LNG supplied from the high-pressure pump 110 to the vaporizer 120.

In addition, for example, when the temperature measured by the first temperature measurement unit TT1 does not satisfy the lowest temperature condition, the first controller LS1 may satisfy a target regasification temperature by decreasing the opening degree of the first valve LV in response to the signal sent from the first temperature controller TIC1 so as to decrease the flow rate of LNG supplied from the high-pressure pump 110 to the vaporizer 120.

Further, for example, when the temperature measured by the second temperature measurement unit TT2 approaches a predetermined value, the first controller LS1 may maintain the temperature of the second heating medium at an outlet of the trim heater 130 to be higher than or equal to the minimum temperature by decreasing the opening degree of the first valve LV in response to the signal sent from the second temperature controller TIC so as to decrease the flow rate of LNG supplied from the high-pressure pump 110 to the vaporizer 120.

According to this embodiment, the first controller LS1 may include a low selector adapted to control the opening degree of the first valve LV by selecting the lowest value of the first valve LV, that is, the lowest opening degree thereof, among the signals sent from the first flow rate controller FIC1, the first temperature controller TIC1 and the second temperature controller TIC2.

As described above, the regasification system according to the present invention can generate power while reducing fuel consumption for power generation by recovering cold heat discarded in regasification of liquefied gas, and can maintain a delivery temperature, pressure and flow rate of the regasified gas within predetermined ranges even upon reduction in temperature of a heat source supplied to the vaporizer by additionally generating power through recovery of the cold heat of the liquefied gas.

Although some embodiments have been described herein, it should be understood by those skilled in the art that various modifications, variations, and alterations can be made by those skilled in the art without departing from the scope of the appended claims.

**<List of Reference Numerals>**

| | | | |
|---|---|---|---|
| 110: | High-pressure pump | 120: | Vaporizer |
| 130: | Trim heater | | |
| 210: | First pump | 310: | Second pump |
| 220: | First heat exchanger | 320: | Second heat exchanger |
| 230: | Expander-generator | 330: | Expansion tank |
| 240: | Receiver | 410: | Seawater pump |
| LL: | Liquefied gas line | | |
| RL: | First heating medium line | | |
| RL1: | First branch-off line | RL2: | Second branch-off line |
| GL: | Second heating medium line | | |
| SL1: | First seawater line | SL2: | Second seawater line |
| LV: | First valve | RV: | Second valve |
| TT1: | First temperature measurement unit | | |
| TT2: | Second temperature measurement unit | | |
| PT1: | Second pressure measurement unit | | |
| PT2: | Second pressure measurement unit | | |
| FT1: | First flow rate measurement unit | | |
| TIC1: | First temperature controller | TIC2: | Second temperature controller |
| TIC3: | Third temperature controller | | |
| PIC2: | Second pressure controller | FIC1: | First flow rate controller |
| LS1: | First controller | LS2: | Second controller. |

## Claims

1. A liquefied-gas regasification system for vessels, comprising:
a vaporizer (120) gasifying liquefied gas into a regasified gas through heat exchange with a first heating medium;
a trim heater (130) heating the regasified gas to a temperature required for a gas consumer through heat exchange with a second heating medium when the regasified gas is delivered from the vaporizer to the gas consumer;
a first cycle in which the first heating medium is circulated; and
a second cycle in which the second heating medium is circulated,
wherein the first cycle comprises a first heat exchanger (220) gasifying the first heating medium to be supplied to the vaporizer (120) through heat exchange with a heat source; an expander-generator (230) generating power through expansion of the first heating medium gasified by the first heat exchanger; and a first heating medium line (RL) connected to the expander-generator to deliver the first heating medium gasified by the first heat exchanger to the expander-generator, and
wherein the second cycle comprises a second heat exchanger (320) heating the second heating medium to be supplied to the trim heater through heat exchange with a heat source;
the liquefied-gas regasification system being **characterized in that** it further comprises:
a first branch-off line (RL1) branched off upstream of the expander-generator (230) from the first heating medium line (RL),
the first branch-off line (RL1) being connected to the vaporizer (120) such that part of the first heating medium is supplied to the vaporizer (230) after bypassing the expander-generator along the first branch-off line;
and **in that** the second heating medium is a refrigerant not undergoing a phase change while circulating in the second cycle.

2. The liquefied gas regasification system according to claim 1, wherein the heat source comprises one of seawater and steam.

3. The liquefied gas regasification system according to claim 1 or 2, further comprising:
a seawater pump (410) suctioning and supplying seawater as the heat source to the first heat exchanger (220) and the second heat exchanger (320),
wherein the seawater pump, the first heat exchanger and the second heat exchanger are disposed under a deck of the vessel, and
the vaporizer (120) and the trim heater (130) are disposed on an upper deck of the vessel.

4. The liquefied gas regasification system according to any of claims 1 to 3, wherein the first heating medium is a refrigerant undergoing phase change while circulating in the first cycle and is selected from among a natural refrigerant, an HFO-based refrigerant, an HFC-based refrigerant, and a mixture thereof not providing fire and explosion risks.

5. The liquefied gas regasification system according to any of claims 1 to 4, wherein the second heating medium is glycol water.

6. The liquefied gas regasification system according to any of claims 1 to 5, further comprising:
a high-pressure pump (110) compressing the liquefied gas to a pressure required for the gas consumer to supply the compressed liquefied gas to the vaporizer (120); and
a first valve (LV) controlling a flow rate of the liquefied gas supplied from the high-pressure pump to the vaporizer.

7. The liquefied gas regasification system according to claim 6, further comprising:
a first temperature measurement unit (TT1) measuring a temperature of natural gas supplied from the trim heater to the gas consumer;
a first pressure measurement unit (PT1) measuring a pressure of the natural gas supplied from the trim heater to the gas consumer;
a first flow rate measurement unit (FT1) measuring a flow rate of the natural gas supplied from the trim heater to the gas consumer; and
a first controller (LS1) regulating a regasified amount of the liquefied gas by regulating an opening degree of the first valve (LV) depending upon any one selected from among the temperature measured by the first temperature measurement unit, the pressure measured by the first pressure measurement unit, and the flow rate measured by the first flow rate measurement unit.

8. The liquefied gas regasification system according to claim 6, further comprising:
a second temperature measurement unit (TT2) measuring a temperature of the second heating medium discharged from the trim heater and cooled through heat exchange; and
a first controller (LS1) regulating a regasified amount of the liquefied gas by regulating an opening degree of the first valve depending upon the temperature measured by the second temperature measurement unit.

9. The liquefied gas regasification system according to claim 6, further comprising:
a first temperature measurement unit (TT1) measuring a temperature of natural gas supplied from the trim heater to the gas consumer;
a second temperature measurement unit (TT2) measuring a temperature of the second heating medium discharged from the trim heater and cooled through heat exchange;
at least one selected from among a first pressure measurement unit (PT1) measuring a pressure of the natural gas supplied from the trim heater to the gas consumer and a first flow rate measurement unit (FT1) measuring a flow rate of the natural gas supplied from the trim heater to the gas consumer; and
a first controller (LS1) regulating an opening degree of the first valve based on the smallest value selected from among an opening degree of the first valve for maintaining the temperature measured by the first temperature measurement unit within a predetermined range, an opening degree of the first valve for maintaining the temperature measured by the second temperature measurement unit within a predetermined range, and an opening degree of the first valve for maintaining at least one of the pressure measured by the first pressure measurement unit and the flow rate measured by the first flow rate measurement unit within a predetermined range.

10. The liquefied gas regasification system according to any of claims 1 to 9, further comprising:
a receiver (240) receiving the first heating medium condensed in the course of gasifying the liquefied gas in the vaporizer;
a second branch-off line (RL2) branched off upstream of the vaporizer (120) from the first heating medium line delivering the first heating medium to the vaporizer such that the first heating medium is supplied to the receiver after bypassing the vaporizer along the second branch-off line;
a second pressure measurement unit (PT2) measuring a pressure of the receiver (240); and
a second controller (PIC2) regulating an opening degree of a second valve (RV) disposed on the second branch-off line depending upon the pressure measured by the second pressure measurement unit.

11. The liquefied gas regasification system according to any of claims 1 to 9, further comprising:
a receiver (240) receiving the first heating medium condensed in the course of gasifying the liquefied gas in the vaporizer (120);
a second branch-off line (RL2) branched off upstream of the vaporizer (120) from the first heating medium line delivering the first heating medium to the vaporizer such that the first heating medium is supplied to the receiver after bypassing the vaporizer along the second branch-off line;
a third temperature controller (TIC3) measuring a temperature of the regasified gas supplied from the vaporizer (120) to the trim heater (130); and
a second controller (LS2) regulating an opening degree of a second valve (RV) disposed on the second branch-off line depending upon the temperature measured by the third temperature controller.

12. The liquefied gas regasification system according to any of claims 1 to 9, further comprising:
a receiver (240) receiving the first heating medium condensed in the course of gasifying the liquefied gas in the vaporizer (120);
a second branch-off line (RL2) branched off upstream of the vaporizer from the first heating medium line delivering the first heating medium to the vaporizer such that the first heating medium is supplied to the receiver after bypassing the vaporizer along the second branch-off line;
a second valve (RV) disposed on the second branch-off line and allowing regulation of an opening degree thereof;
a second pressure measurement unit (PT2) measuring a pressure of the receiver;
a third temperature controller (TIC3) measuring a temperature of the regasified gas supplied from the vaporizer to the trim heater; and
a second controller (LS2) regulating an opening degree of the second valve based on a smaller value selected from among an opening degree of the second valve for maintaining the pressure measured by the second pressure measurement unit within a predetermined range and an opening degree of the second valve for maintaining the temperature measured by the third temperature controller within a predetermined range.

13. A liquefied-gas regasification method for vessels, comprising:
gasifying liquefied gas through heat exchange with a first heating medium; and
heating the regasified gas to a temperature required for a gas consumer through heat exchange with a second heating medium,
wherein the first heating medium is circulated in a first cycle in which the first heating medium, condensed by heat exchange with the liquefied-gas, is gasified through heat exchange with a heat source, part of the gasified first heating medium being expanded by an expander-generator to generate power and subjected to heat exchange with the liquefied gas, while another part of the gasified first heating medium bypasses the expander-generator along a first branch-off line, and the second heating medium is circulated in a second cycle in which the second heating medium is heated through heat exchange with the heat source and subjected to heat exchange with the regasified gas, without undergoing a phase change.

14. The liquefied-gas regasification method for vessels according to claim 13, wherein:
a heat source for heating the first heating medium and the second heating medium is seawater, steam, or a combination of seawater and steam;
the first heating medium is a refrigerant undergoing phase change while circulating in the first cycle and is selected from among a natural refrigerant, an HFO-based refrigerant, an HFC-based refrigerant, and a mixture thereof not providing fire and explosion risks; and
the second heating medium is glycol water.

15. The liquefied-gas regasification method for vessels according to claim 13, wherein:
the liquefied gas to be regasified is compressed to a pressure required for the gas consumer and subjected to heat exchange with the first heating medium; and
a flow rate of the liquefied gas to be subjected to heat exchange with the first heating medium is controlled based on a measured value obtained by measuring at least one selected from among a pressure, a temperature and a flow rate of the regasified gas heated through heat exchange with the second heating medium and supplied to the gas consumer.

16. The liquefied-gas regasification method for vessels according to claim 13, wherein:
the liquefied gas to be regasified is compressed to a pressure required for the gas consumer and subjected to heat exchange with the first heating medium; and
a flow rate of the liquefied gas to be subjected to heat exchange with the first heating medium is controlled based on a measured value obtained by measuring a temperature of the second heating medium cooled while heating the regasified gas.

17. The liquefied-gas regasification method for vessels according to claim 13, wherein:
the first heating medium condensed in the course of gasifying the liquefied gas is stored in the receiver and resupplied to the vaporizer after heat exchange with the heat source; and
a flow rate of the first heating medium to be directly supplied to the receiver without heat exchange with the liquefied gas is controlled depending upon at least one measurement value selected from among a pressure measurement value of the receiver and a temperature measurement value of the regasified gas to be subjected to heat exchange with the second heating medium.

## Patentansprüche

1. Flüssiggas-Rückvergasungssystem für Schiffe, umfassend:
einen Verdampfer (120), der Flüssiggas durch Wärmeaustausch mit einem ersten Heizmedium in ein rückvergastes Gas vergast;
ein Kompensationsheizgerät (130), das das rückvergaste Gas durch Wärmeaustausch mit einem zweiten Heizmedium auf eine für einen Gasverbraucher erforderliche Temperatur erwärmt, wenn das rückvergaste Gas von dem Verdampfer an den Gasverbraucher abgegeben wird;
einen ersten Zyklus, in dem das erste Heizmedium umgewälzt wird; und
einen zweiten Zyklus, in dem das zweite Heizmedium umgewälzt wird,
wobei der erste Zyklus einen ersten Wärmetauscher (220) umfasst, der das dem Verdampfer (120) zuzuführende erste Heizmedium durch Wärmeaustausch mit einer Wärmequelle vergast; einen Expander-Generator (230), der durch Expansion des ersten, durch den ersten Wärmetauscher vergasten Heizmediums Energie erzeugt; und eine erste Heizmediumleitung (RL), die mit dem Expander-Generator verbunden ist, um das von dem ersten Wärmetauscher vergaste erste Heizmedium zum Expander-Generator abzugeben, und
wobei der zweite Kreislauf einen zweiten Wärmetauscher (320) umfasst, der das dem Kompensationsheizgerät zuzuführende zweite Heizmedium durch Wärmeaustausch mit einer Wärmequelle erwärmt;
wobei das Flüssiggas-Rückvergasungssystem **dadurch gekennzeichnet ist, dass** es ferner Folgendes umfasst:
eine erste Zweigleitung (RL1), die stromaufwärts von dem Expander-Generator (230) von der ersten Heizmediumleitung (RL) abzweigt,
wobei die erste Zweigleitung (RL1) mit dem Verdampfer (120) verbunden ist, sodass ein Teil des ersten Heizmediums dem Verdampfer (230) zugeführt wird, nachdem es den Expander-Generator entlang der ersten Zweigleitung umgangen hat;
und dass das zweite Heizmedium ein Kältemittel ist, das beim Umwälzen in dem zweiten Kreislauf keine Phasenänderung erfährt.

2. Flüssiggas-Rückvergasungssystem nach Anspruch 1, wobei die Wärmequelle eines von Meereswasser oder Dampf umfasst.

3. Flüssiggas-Rückvergasungssystem nach Anspruch 1 oder 2, ferner umfassend:
eine Meereswasserpumpe (410), die Meereswasser als Wärmequelle ansaugt und dem ersten Wärmetauscher (220) und dem zweiten Wärmetauscher (320) zuführt,
wobei die Meereswasserpumpe, der schnelle Wärmetauscher und der zweite Wärmetauscher unter einem Deck des Schiffs angeordnet sind, und
der Verdampfer (120) und das Kompensationsheizgerät (130) auf einem Oberdeck des Schiffs angeordnet sind.

4. Flüssiggas-Rückvergasungssystem nach einem der Ansprüche 1 bis 3, wobei das erste Heizmedium ein Kältemittel ist, das eine Phasenänderung erfährt, während es in dem ersten Kreislauf umgewälzt wird, und ausgewählt ist aus einem natürlichen Kältemittel, einem Kältemittel auf HFO-Basis, einem Kältemittel auf HFC-Basis und einem Gemisch davon, das keine Brand- und Explosionsgefahr darstellt.

5. Flüssiggas-Rückvergasungssystem nach einem der Ansprüche 1 bis 4, wobei das zweite Heizmedium Glykolwasser ist.

6. Flüssiggas-Rückvergasungssystem nach einem der Ansprüche 1 bis 5, ferner umfassend:
eine Hochdruckpumpe (110), die das Flüssiggas auf einen Druck verdichtet, der für den Gasverbraucher erforderlich ist, um das verdichtete Flüssiggas dem Verdampfer (120) zuzuführen; und
ein erstes Ventil (LV), das eine Durchflussmenge des von der Hochdruckpumpe zu dem Verdampfer zugeführten Flüssiggases steuert.

7. Flüssiggas-Rückvergasungssystem nach Anspruch 6, ferner umfassend:
eine erste Temperaturmesseinheit (TT1), die die Temperatur von Erdgas misst, die dem Gasverbraucher von dem Kompensationsheizgerät zugeführt wird;
eine erste Druckmesseinheit (PT1), die einen Druck des Erdgases misst, das von dem Kompensationsheizgerät an den Gasverbraucher abgegeben wird;
eine erste Durchflussmengenmesseinheit (FT1), die eine Durchflussmenge des Erdgases misst, das von dem Kompensationsheizgerät an den Gasverbraucher abgegeben wird; und
einen ersten Regler (LS1), der eine rückverflüssigte Menge des Flüssiggases regelt, indem er einen Öffnungsgrad des ersten Ventils (LV) abhängig von der Temperatur, die von der ersten Temperaturmesseinheit gemessen wird, dem Druck, der von der ersten Druckmesseinheit gemessen wird, und der Durchflussmenge, die von der ersten Durchflussmengenmesseinheit gemessen wird, regelt.

8. Flüssiggas-Rückvergasungssystem nach Anspruch 6, ferner umfassend:
eine zweite Temperaturmesseinheit (TT2), die eine Temperatur des zweiten Heizmediums misst, das von dem Kompensationsheizgerät abgegeben und durch Wärmeaustausch gekühlt wird; und
einen ersten Regler (LS1), der eine rückverflüssigte Menge des Flüssiggases regelt, indem er einen Öffnungsgrad des ersten Ventils abhängig von der von der zweiten Temperaturmesseinheit gemessenen Temperatur regelt.

9. Flüssiggas-Rückvergasungssystem nach Anspruch 6, ferner umfassend:
eine erste Temperaturmesseinheit (TT1), die eine Temperatur des Erdgases misst, das dem Gasverbraucher von dem Kompensationsheizgerät zugeführt wird;
eine zweite Temperaturmesseinheit (TT2), die eine Temperatur des zweiten Heizmediums misst, das von dem Kompensationsheizgerät abgegeben und durch Wärmeaustausch gekühlt wird;
mindestens eine, die ausgewählt ist aus einer ersten Druckmesseinheit (PT1), einen Druck des Erdgases misst, das dem Gasverbraucher von dem Kompensationsheizgerät zugeführt wird, und einer ersten Durchflussmengenmesseinheit (FT1), die eine Durchflussmenge des Erdgases misst, das dem Gasverbraucher von dem Kompensationsheizgerät zugeführt wird; und
einen ersten Regler (LS1), der einen Öffnungsgrad des ersten Ventils basierend auf dem kleinsten Wert regelt, der ausgewählt ist aus einem Öffnungsgrad des ersten Ventils zum Halten der von der ersten Temperaturmesseinheit gemessenen Temperatur innerhalb eines vorbestimmten Bereichs, einem Öffnungsgrad des ersten Ventils zum Halten der von der zweiten Temperaturmesseinheit gemessenen Temperatur innerhalb eines vorbestimmten Bereichs und einem Öffnungsgrad des ersten Ventils zum Halten des von der ersten Druckmesseinheit gemessenen Drucks und/oder der von der ersten Durchflussmengenmesseinheit gemessenen Durchflussmenge innerhalb eines vorbestimmten Bereichs.

10. Flüssiggas-Rückvergasungssystem nach einem der Ansprüche 1 bis 9, ferner umfassend:
einen Empfänger (240), der das erste Heizmedium erhält, das im Verlauf eines Vergasens des Flüssiggases in dem Verdampfer kondensiert;
eine zweite Zweigleitung (RL2), die stromaufwärts von dem Verdampfer (120) von der ersten Heizmediumleitung abzweigt und das erste Heizmedium an den Verdampfer liefert, sodass das erste Heizmedium dem Empfänger zugeführt wird, nachdem es den Verdampfer entlang der zweiten Zweigleitung umgangen hat;
eine zweite Druckmesseinheit (PT2), die einen Druck des Empfängers (240) misst; und
einen zweiten Regler (PIC2), der einen Öffnungsgrad eines zweiten Ventils (RV), das an der zweiten Zweigleitung angeordnet ist, abhängig von dem von der zweiten Druckmesseinheit gemessenen Druck regelt.

11. Flüssiggas-Rückvergasungssystem nach einem der Ansprüche 1 bis 9, ferner umfassend:
einen Empfänger (240), der das erste Heizmedium erhält, das im Verlauf eines Vergasens des Flüssiggases in dem Verdampfer (120) kondensiert;
eine zweite Zweigleitung (RL2), die stromaufwärts von dem Verdampfer (120) von der ersten Heizmediumleitung abzweigt und das erste Heizmedium an den Verdampfer liefert, sodass das erste Heizmedium dem Empfänger zugeführt wird, nachdem es den Verdampfer entlang der zweiten Zweigleitung umgangen hat;
einen dritten Temperaturregler (TIC3), der die Temperatur des rückvergasten Gases misst, das dem Kompensationsheizgerät (130) von dem Verdampfer (120) zugeführt wird; und
einen zweiten Regler (LS2), der einen Öffnungsgrad eines zweiten Ventils (RV), das in der zweiten Zweigleitung angeordnet ist, abhängig von der durch den dritten Temperaturregler gemessenen Temperatur regelt.

12. Flüssiggas-Rückvergasungssystem nach einem der Ansprüche 1 bis 9, ferner umfassend:
einen Empfänger (240), der das erste Heizmedium erhält, das im Verlauf eines Vergasens des Flüssiggases in dem Verdampfer (120) kondensiert;
eine zweite Zweigleitung (RL2), die stromaufwärts von dem Verdampfer von der ersten Heizmediumleitung abzweigt und das erste Heizmedium an den Verdampfer liefert, sodass das erste Heizmedium dem Empfänger zugeführt wird, nachdem es den Verdampfer entlang der zweiten Zweigleitung umgangen hat;
ein zweites Ventil (RV), das an der zweiten Zweigleitung angeordnet ist und eine Regulierung eines Öffnungsgrads davon ermöglicht;
eine zweite Druckmesseinheit (PT2), die einen Druck des Empfängers misst;
einen dritten Temperaturregler (TIC3), der eine Temperatur des rückvergasten Gases misst, das dem Kompensationsheizgerät von dem Verdampfer zugeführt wird; und
einen zweiten Regler (LS2), der einen Öffnungsgrad des zweiten Ventils basierend auf einem kleineren Wert regelt, der ausgewählt ist aus einem Öffnungsgrad des zweiten Ventils zum Halten des von der zweiten Druckmesseinheit gemessenen Drucks innerhalb eines vorbestimmten Bereichs und einem Öffnungsgrad des zweiten Ventils zum Halten der von dem dritten Temperaturregler gemessenen Temperatur innerhalb eines vorbestimmten Bereichs.

13. Flüssiggas-Rückvergasungsverfahren für Schiffe, umfassend:
Vergasen von Flüssiggas durch Wärmeaustausch mit einem ersten Heizmedium; und
Erwärmen des rückvergasten Gases auf eine für einen Gasverbraucher erforderliche Temperatur durch Wärmeaustausch mit einem zweiten Heizmedium,
wobei das erste Heizmedium in einem ersten Kreislauf umgewälzt wird, in dem das erste Heizmedium, das durch Wärmeaustausch mit dem Flüssiggas kondensiert wurde, durch Wärmeaustausch mit einer Wärmequelle vergast wird, wobei ein Teil des vergasten ersten Heizmediums durch einen Expander-Generator expandiert wird, um Energie zu erzeugen, und einem Wärmeaustausch mit dem Flüssiggas unterzogen wird, während ein anderer Teil des vergasten ersten Heizmediums den Expander-Generator entlang einer ersten Zweigleitung umgeht; und das zweite Heizmedium in einem zweiten Kreislauf umgewälzt wird, in dem das zweite Heizmedium durch Wärmeaustausch mit der Wärmequelle erwärmt wird und einem Wärmeaustausch mit dem rückvergasten Gas unterzogen wird, ohne dass es eine Phasenänderung erfährt.

14. Flüssiggas-Rückvergasungsverfahren für Schiffe nach Anspruch 13, wobei:
eine Wärmequelle zum Erwärmen des ersten Heizmediums und des zweiten Heizmediums Meerwasser, Dampf oder eine Kombination aus Meerwasser und Dampf ist;
das erste Heizmedium ein Kältemittel ist, das eine Phasenänderung erfährt, während es in dem ersten Kreislauf umgewälzt wird, und ausgewählt ist aus einem natürlichen Kältemittel, einem Kältemittel auf HFO-Basis, einem Kältemittel auf HFC-Basis und einem Gemisch davon, das keine Brand- und Explosionsgefahr darstellt; und
das zweite Heizmedium Glykolwasser ist.

15. Flüssiggas-Rückvergasungsverfahren für Schiffe nach Anspruch 13, wobei:
das Flüssiggas, das rückvergast werden soll, auf einen für den Gasverbraucher erforderlichen Druck verdichtet und einem Wärmeaustausch mit dem ersten Heizmedium unterzogen wird; und
eine Durchflussmenge des Flüssiggases, das einem Wärmeaustausch mit dem ersten Heizmedium unterzogen werden soll, basierend auf einem Messwert gesteuert wird, der durch Messen mindestens eines von einem Druck, einer Temperatur und einer Durchflussmenge des durch Wärmeaustausch mit dem zweiten Heizmedium erwärmten und dem Gasverbraucher zugeführten rückvergasten Gases erlangt wird.

16. Flüssiggas-Rückvergasungsverfahren für Schiffe nach Anspruch 13, wobei:
das Flüssiggas, das rückvergast werden soll, auf einen für den Gasverbraucher erforderlichen Druck verdichtet und einem Wärmeaustausch mit dem Heizmedium unterzogen wird; und
eine Durchflussmenge des Flüssiggases, das einem Wärmeaustausch mit dem ersten Heizmedium unterzogen werden soll, basierend auf einem Messwert gesteuert wird, der durch Messen einer Temperatur des zweiten Heizmediums erlangt wird, das beim Erwärmen des rückvergasten Gases abgekühlt wird.

17. Flüssiggas-Rückvergasungsverfahren für Schiffe nach Anspruch 13, wobei:
das erste Heizmedium, das beim Vergasen des Flüssiggases kondensiert, in dem Sammelbehälter gespeichert und nach Wärmeaustausch mit der Wärmequelle dem Verdampfer wieder zugeführt wird; und
eine Durchflussmenge des ersten Heizmediums, das ohne Wärmeaustausch mit dem Flüssiggas direkt dem Empfänger zugeführt werden soll, abhängig von mindestens einem Messwert geregelt wird, der aus ausgewählt ist aus einem Druckmesswert des Empfängers und einem Temperaturmesswert des rückvergasten Gases, das dem Wärmeaustausch mit dem zweiten Heizmedium unterzogen werden soll.

## Revendications

1. Système de regazéification de gaz liquéfié pour navires, comprenant :
un vaporiseur (120) gazéifiant du gaz liquéfié en un gaz regazéifié par échange de chaleur avec un premier fluide caloporteur ;
un réchauffeur d'appoint (130) chauffant le gaz regazéifié à une température requise pour un consommateur de gaz par échange de chaleur avec un deuxième fluide caloporteur lorsque le gaz regazéifié est délivré par le vaporiseur au consommateur de gaz ;
un premier cycle dans lequel circule le premier fluide caloporteur ; et
un deuxième cycle dans lequel circule le deuxième fluide caloporteur,
dans lequel le premier cycle comprend un premier échangeur de chaleur (220) gazéifiant le premier fluide caloporteur devant être fourni au vaporiseur (120) par échange de chaleur avec une source de chaleur ; un générateur-détendeur (230) générant de l'énergie par détente du premier fluide caloporteur gazéifié par le premier échangeur de chaleur ; et une première conduite de fluide caloporteur (RL) reliée au générateur-détendeur pour délivrer le premier fluide caloporteur gazéifié par le premier échangeur de chaleur au générateur-détendeur, et
dans lequel le deuxième cycle comprend un deuxième échangeur de chaleur (320) chauffant le deuxième fluide caloporteur devant être fourni au réchauffeur d'appoint par échange de chaleur avec une source de chaleur ;
le système de regazéification de gaz liquéfié étant **caractérisé en ce qu'**il comprend en outre :
une première conduite de dérivation (RL1) dérivée en amont du générateur-détendeur (230) à partir de la première conduite de fluide caloporteur (RL),
la première conduite de dérivation (RL1) étant reliée au vaporiseur (120) de telle sorte qu'une partie du premier fluide caloporteur est fournie au vaporiseur (230) après avoir contourné le générateur-détendeur le long de la première conduite de dérivation ;
et **en ce que** le deuxième fluide caloporteur est un fluide frigorigène ne subissant pas de changement de phase lors de la circulation dans le deuxième cycle.

2. Système de regazéification de gaz liquéfié selon la revendication 1, dans lequel la source de chaleur comprend l'une entre l'eau de mer et la vapeur.

3. Système de regazéification de gaz liquéfié selon la revendication 1 ou 2, comprenant en outre :
une pompe d'eau de mer (410) aspirant et fournissant de l'eau de mer en tant que source de chaleur au premier échangeur de chaleur (220) et au deuxième échangeur de chaleur (320),
dans lequel la pompe d'eau de mer, le premier échangeur de chaleur et le deuxième échangeur de chaleur sont disposés sous un pont du navire, et
le vaporiseur (120) et le réchauffeur d'appoint (130) sont disposés sur un pont supérieur du navire.

4. Système de regazéification de gaz liquéfié selon l'une quelconque des revendications 1 à 3, dans lequel le premier fluide caloporteur est un fluide frigorigène subissant un changement de phase lorsqu'il circule dans le premier cycle et est sélectionné parmi un fluide frigorigène naturel, un fluide frigorigène à base d'HFO, un fluide frigorigène à base d'HFC et un mélange de ceux-ci ne présentant pas de risques d'incendie et d'explosion.

5. Système de regazéification de gaz liquéfié selon l'une quelconque des revendications 1 à 4, dans lequel le deuxième fluide caloporteur est de l'eau glycolée.

6. Système de regazéification de gaz liquéfié selon l'une quelconque des revendications 1 à 5, comprenant en outre :
une pompe haute-pression (110) comprimant le gaz liquéfié à une pression requise pour le consommateur de gaz pour fournir le gaz liquéfié comprimé au vaporiseur (120) ; et
une première vanne (LV) contrôlant un débit du gaz liquéfié fourni par la pompe haute-pression au vaporiseur.

7. Système de regazéification de gaz liquéfié selon la revendication 6, comprenant en outre :
une première unité de mesure de température (TT1) mesurant une température de gaz naturel fourni par le réchauffeur d'appoint au consommateur de gaz ;
une première unité de mesure de pression (PT1) mesurant une pression du gaz naturel fourni par le réchauffeur d'appoint au consommateur de gaz ;
une première unité de mesure de débit (FT1) mesurant un débit du gaz naturel fourni par le réchauffeur d'appoint au consommateur de gaz ; et
un premier contrôleur (LS1) régulant une quantité regazéifiée du gaz liquéfié en régulant un degré d'ouverture de la première vanne (LV) en fonction de l'un quelconque sélectionné parmi la température mesurée par la première unité de mesure de température, la pression mesurée par la première unité de mesure de pression et le débit mesuré par la première unité de mesure de débit.

8. Système de regazéification de gaz liquéfié selon la revendication 6, comprenant en outre :
une deuxième unité de mesure de température (TT2) mesurant une température du deuxième fluide caloporteur évacué par le réchauffeur d'appoint et refroidi par échange de chaleur ; et
un premier contrôleur (LS1) régulant une quantité regazéifiée du gaz liquéfié en régulant un degré d'ouverture de la première vanne en fonction de la température mesurée par la deuxième unité de mesure de température.

9. Système de regazéification de gaz liquéfié selon la revendication 6, comprenant en outre :
une première unité de mesure de température (TT1) mesurant une température du gaz naturel fourni par le réchauffeur d'appoint au consommateur de gaz ;
une deuxième unité de mesure de température (TT2) mesurant une température du deuxième fluide caloporteur évacué par le réchauffeur d'appoint et refroidi par échange de chaleur ;
au moins l'une sélectionnée parmi une première unité de mesure de pression (PT1) mesurant une pression du gaz naturel fourni par le réchauffeur d'appoint au consommateur de gaz et une première unité de mesure de débit (FT1) mesurant un débit du gaz naturel fourni par le premier réchauffeur d'appoint au consommateur de gaz ; et
un premier contrôleur (LS1) régulant un degré d'ouverture de la première vanne sur la base de la plus petite valeur sélectionnée parmi un degré d'ouverture de la première vanne pour maintenir la température mesurée par la première unité de mesure de température au sein d'une plage prédéterminée, un degré d'ouverture de la première vanne pour maintenir la température mesurée par la deuxième unité de mesure de température au sein d'une plage prédéterminée, et un degré d'ouverture de la première vanne pour maintenir au moins l'un de la pression mesurée par la première unité de mesure de pression et du débit mesuré par la première unité de mesure de débit au sein d'une plage prédéterminée.

10. Système de regazéification de gaz liquéfié selon l'une quelconque des revendications 1 à 9, comprenant en outre :
un récepteur (240) recevant le premier fluide caloporteur condensé au cours de la gazéification du gaz liquéfié dans le vaporiseur ;
une deuxième conduite de dérivation (RL2) dérivée en amont du vaporiseur (120) de la première conduite de fluide caloporteur délivrant le premier fluide caloporteur au vaporiseur de telle sorte que le premier fluide caloporteur est fourni au récepteur après avoir contourné le vaporiseur le long de la deuxième conduite de dérivation ;
une deuxième unité de mesure de pression (PT2) mesurant une pression du récepteur (240) ; et
un deuxième contrôleur (PIC2) régulant un degré d'ouverture d'une deuxième vanne (RV) disposée sur la deuxième conduite de dérivation en fonction de la pression mesurée par la deuxième unité de mesure de pression.

11. Système de regazéification de gaz liquéfié selon l'une quelconque des revendications 1 à 9, comprenant en outre :
un récepteur (240) recevant le premier fluide caloporteur condensé au cours de la gazéification du gaz liquéfié dans le vaporiseur (120) ;
une deuxième conduite de dérivation (RL2) dérivée en amont du vaporiseur (120) de la première conduite de fluide caloporteur délivrant le premier fluide caloporteur au vaporiseur de telle sorte que le premier fluide caloporteur est fourni au récepteur après avoir contourné le vaporiseur le long de la deuxième conduite de dérivation ;
un troisième contrôleur de température (TIC3) mesurant une température du gaz regazéifié fourni par le vaporiseur (120) au réchauffeur d'appoint (130) ; et
un deuxième contrôleur (LS2) régulant un degré d'ouverture d'une deuxième vanne (RV) disposée sur la deuxième conduite de dérivation en fonction de la température mesurée par le troisième contrôleur de température.

12. Système de regazéification de gaz liquéfié selon l'une quelconque des revendications 1 à 9, comprenant en outre :
un récepteur (240) recevant le premier fluide caloporteur condensé au cours de la gazéification du gaz liquéfié dans le vaporiseur (120) ;
une deuxième conduite de dérivation (RL2) dérivée en amont du vaporiseur de la première conduite de fluide caloporteur délivrant le premier fluide caloporteur au vaporiseur de telle sorte que le premier fluide caloporteur est fourni au récepteur après avoir contourné le vaporiseur le long de la deuxième conduite de dérivation ;
une deuxième vanne (RV) disposée sur la deuxième conduite de dérivation et permettant la régulation d'un degré d'ouverture de celle-ci ;
une deuxième unité de mesure de pression (PT2) mesurant une pression du récepteur ;
un troisième contrôleur de température (TIC3) mesurant une température du gaz regazéifié fourni par le vaporiseur au réchauffeur d'appoint ; et
un deuxième contrôleur (LS2) régulant un degré d'ouverture de la deuxième vanne sur la base d'une valeur inférieure sélectionnée parmi un degré d'ouverture de la deuxième vanne pour maintenir la pression mesurée par la deuxième unité de mesure de pression au sein d'une plage prédéterminée et un degré d'ouverture de la deuxième vanne pour maintenir la température mesurée par le troisième contrôleur de température au sein d'une plage prédéterminée.

13. Procédé de regazéification de gaz liquéfié pour navires, comprenant :
la gazéification de gaz liquéfié par échange de chaleur avec un premier fluide caloporteur ; et
le chauffage du gaz regazéifié à une température requise pour un consommateur de gaz par échange de chaleur avec un deuxième fluide caloporteur,
dans lequel le premier fluide caloporteur circule dans un premier cycle dans lequel le premier fluide caloporteur, condensé par échange de chaleur avec le gaz liquéfié, est gazéifié par échange de chaleur avec une source de chaleur, une partie du premier fluide caloporteur gazéifié étant détendu par un générateur-détendeur pour générer de l'énergie et soumis à un échange de chaleur avec le gaz liquéfié, alors qu'une autre partie du premier fluide caloporteur gazéifié contourne le générateur-détendeur le long d'une première conduite de dérivation, et le deuxième fluide caloporteur circule dans un deuxième cycle dans lequel le deuxième fluide caloporteur est chauffé par échange de chaleur avec la source de chaleur et soumis à un échange de chaleur avec le gaz regazéifié, sans subir un changement de phase.

14. Procédé de regazéification de gaz liquéfié pour navires selon la revendication 13,
dans lequel :
une source de chaleur pour chauffer le premier fluide caloporteur et le deuxième fluide caloporteur est de l'eau de mer, de la vapeur ou une combinaison d'eau de mer et de vapeur ;
le premier fluide caloporteur est un fluide frigorigène subissant un changement de phase lors de la circulation dans le premier cycle et est sélectionné parmi un fluide frigorigène naturel, un fluide frigorigène à base d'HFO, un fluide frigorigène à base d'HFC et un mélange de ceux-ci ne présentant pas de risques d'incendie et d'explosion ; et
le deuxième fluide caloporteur est de l'eau glycolée.

15. Procédé de regazéification de gaz liquéfié pour navires selon la revendication 13, dans lequel :
le gaz liquéfié devant être regazéifié est comprimé à une pression requise pour le consommateur de gaz et soumis à un échange de chaleur avec le premier fluide caloporteur ; et
un débit du gaz liquéfié devant être soumis à un échange de chaleur avec le premier fluide caloporteur est contrôlé sur la base d'une valeur mesurée obtenue en mesurant au moins l'un sélectionné parmi une pression, une température et un débit du gaz regazéifié chauffé par échange de chaleur avec le deuxième fluide caloporteur et fourni au consommateur de gaz.

16. Procédé de regazéification de gaz liquéfié pour navires selon la revendication 13, dans lequel :
le gaz liquéfié devant être regazéifié est comprimé à une pression requise pour le consommateur de gaz et soumis à un échange de chaleur avec le premier fluide caloporteur ; et
un débit du gaz liquéfié devant être soumis à un échange de chaleur avec le premier fluide caloporteur est contrôlé sur la base d'une valeur mesurée obtenue en mesurant une température du deuxième fluide caloporteur tout en chauffant le gaz regazéifié.

17. Procédé de regazéification de gaz liquéfié pour navires selon la revendication 13, dans lequel :
le premier fluide caloporteur condensé au cours de la gazéification du gaz liquéfié est stocké dans le récepteur et renvoyé vers le vaporiseur après échange de chaleur avec la source de chaleur ; et
un débit du premier fluide caloporteur devant être fourni directement au récepteur sans échange de chaleur avec le gaz liquéfié est contrôlé en fonction d'au moins une valeur de mesure sélectionnée parmi une valeur de mesure de pression du récepteur et une valeur de mesure de température du gaz regazéifié devant être soumis à un échange de chaleur avec le deuxième fluide caloporteur.
